(19) Europäisches Patentamt
European Patent Office
Office européen des brevets

(11) Publication number: **0 095 304**
**B1**

(12) # EUROPEAN PATENT SPECIFICATION

(45) Date of publication of patent specification: **03.09.86**

(51) Int. Cl.$^4$: **C 01 B 33/28**

(21) Application number: **83302776.6**

(22) Date of filing: **17.05.83**

(54) **High silica zeolite beta and method for making it.**

(30) Priority: **18.05.82 US 379399**

(43) Date of publication of application:
**30.11.83 Bulletin 83/48**

(45) Publication of the grant of the patent:
**03.09.86 Bulletin 86/36**

(84) Designated Contracting States:
**AT BE DE FR GB IT NL SE**

(56) References cited:
**DD-A- 87 312**
**GB-A-1 061 847**
**GB-A-1 537 707**
**US-A-4 093 560**
**US-A-4 273 753**
**US-H- 28 341**

(73) Proprietor: **MOBIL OIL CORPORATION**
**150 East 42nd Street**
**New York New York 10017 (US)**

(72) Inventor: **LaPierre, Rene Bernard**
**43 Arrowhead Court**
**Medford New Jersey 08055 (US)**
Inventor: **Wong, Stephen Sui Fai**
**138 Barnsbury Road**
**Langhorne Pennsylvania 19047 (US)**

(74) Representative: **West, Alan Harry**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Description

This invention relates to a form of zeolite beta having a higher silica:alumina ratio than is conventional for this zeolite.

Many crystalline aluminosilicate zeolites are known. Some occur (at least so far) only in nature, for instance paulingite and merlinoite; some occur only as a result of synthesis, for instance zeolites A and ZSM-5; and some occur in both natural and synthetic forms, for instance mordenite, a synthetic counterpart of which is known as Zeolon, and faujasite, synthetic counterparts of which are known as zeolites X and Y. Counterparts are of course demonstrated as such by correspondence of their X-ray diffraction data, the indicia by means of which the individuality of a zeolite is established. Such data are a manifestation of the particular geometry of the three-dimensional lattice, formed of $SiO_4$ and $AlO_4$ tetrahedra crosslinked by the sharing of oxygen atoms and including sufficient cationic complement to balance the resulting negative charge on the $AlO_4$ tetrahedra, of which a zeolite consists.

The chemical formula of a zeolite is thus:

$$M_{x/n}: (AlO_2)_x:(SiO_2)_y$$

where M is a cation of valence n and x and y are the number of aluminum and silicon atoms, respectively, in the unit cell. This expression is however, frequently transformed into the mole ratio of oxides form:

$$M_{2/n}O:Al_2O_3:2_{y/x}SiO_2$$

which is of course empirically ascertainable and thus the only formula which can be ascribed to a zeolite when its unit cell contents are unknown. Since the only significant quantity in such a formula is the term $2_{y/x}$, and since this term (which is almost invariably a range) can usually be satisfied by many zeolites of widely differing lattice geometries, chemical formula is not of value in establishing the identity of a zeolite. Furthermore, such a formula frequently expresses artefact when empirically derived, the cationic-valence-/aluminum-atoms ratio deviating from the unity which it must in fact be; and it fails to provide for zeolites whose lattice structures can be brought into existence from reaction mixtures from which alumina is excluded.

Zeolite beta is a known zeolite and is fully described in U.S. Patents 3,308,069 and Re 28,341; it has a composition which is expressed as follows for the as-synthesized form, on an anhydrous basis:

$$[XNa(1.0\pm0.1-X)TEA]AlO_2 \cdot YSiO_2.$$

where X is less than 1, preferably less than 0.75; TEA represents tetraethylammonium ion; Y is greater than 5 but less than 100. Water of hydration may be present in varying amounts depending on the condition of dehydration and on the metal cation present. The TEA component is calculated by difference from the analyzed value of sodium and the ultimate theoretical cation of Al ratio of 1.0/1.

In the full base-exchanged form, beta has the composition (anhydrous basis):

$$[\frac{x}{n} M(1\pm0.1-X)H] \cdot AlO_2 \cdot YSiO_2.$$

where X and Y have the values listed above and n is the valence of the metal M. In the partly base-exchanged form which is obtained from the initial sodium form of the zeolite by ion exchange without calcining, zeolite beta has the formula (anhydrous basis):

$$[\frac{x}{n} M(1\pm0.1-X)TEA]AlO_2 \cdot YSiO_2.$$

where X, Y, n and M have the values listed above.

One factor that is known to influence the tolerance of crystalline aluminosilicates to acidic and thermal environments is the structural silica-to-alumina mole ratio. For any given class of aluminosilicates, catalytic activity, thermal stability and resistance to acid and steam attack are known to improve as the structural silica:alumina mole ratio is increased. The value of procedures that are effective in increasing this ratio is therefore readily apparent.

In synthetic crystalline aluminosilicate zeolites, the silica to alumina mole ratio is essentially determined by the nature of the starting materials and the relative quantities of such materials used in the preparation of the zeolite. Some variation in the silica to alumina mole ratio can be obtained by changing the proportion of reactants, for example increasing the relative concentration of the silica precursor relative to the alumina precursor. However, definite limits in the maximum obtainable silica to alumina mole ratio are observed. For example, synthetic faujasites having a silica to alumina mole ratio of about 5.2 to 5.6 can be obtained by increasing the relative proportion of the silica precursor. However, when the silica proportion is increased to even higher levels no commensurate increase in the silica to alumina mole ratio of the crystallized synthetic faujasite is observed. Thus, the silica to alumina mole ratio of about 5.6 must be considered an upper limit in a preparative process using conventional reagents. Similar upper limits for the silica:alumina ratio obtainable in the synthesis of mordenite and erionite are also observed.

Attempts have been made to increase the silica:alumina mole ratio of crystalline zeolites by removal of aluminum from the crystal structure with strong acids. The silica:alumina mole ratio of zeolites may also be increased by converting the parent zeolite at least partially into its hydrogen form, hydrolyzing the aluminum to aluminum

hydroxide, and thereafter physically removing the displaced aluminum.

U.S. Patent 3,442,795 describes a process for preparing highly siliceous zeolite-type materials from crystalline aluminosilicates by means of a solvolysis, for example hydrolysis, followed by a chelation. In this process, the acid form of a zeolite is subjected to hydrolysis, to remove aluminum from the aluminosilicate. The aluminum can then be physically separated from the aluminosilicate by the use of complexing or chelating agents such as ethylenediaminetetraacetic acid or carboxylic acid, to form aluminum complexes which are readily removable from the aluminosilicate. Ultra high silicon-content zeolites and their preparation by the use of acid and complexing agents are disclosed in U.S. Patent 4,093,560. The method described in that patent is however, applicable only to zeolites with a silica:alumina ratio of 2:1 to 6:1.

In U.S. Patent 3,937,791, a method is described for removing alumina from a crystalline aluminosilicate. That method comprises heating the aluminosilicate to a temperature in the range between about 50°C and 100°C in the presence of a cationic form of chromium in an aqueous solution of above 0.01 N of a chromium salt of a mineral acid at a pH less than 3.5, so that the atomic ratio of chromium to aluminum is greater than 0.5.

A method for increasing the silica to alumina mole ratio of a crystalline aluminosilicate zeolite by contacting the zeolite with water at elevated temperature and then treating to remove alumina from the crystal lattice is disclosed in U.S. Patent 3,591,488. Following the high temperature water treatment, amorphous alumina is removed from the zeolite material by contacting with a dilute mineral acid or an organic acid chelating agent.

In U.S. Patent 3,640,681, framework aluminum is extracted from crystalline zeolites using acetylacetone as the extracting agent. Prior to contact with the acetylacetone the zeolite must be rendered substantially cation-deficient and at least partially dehydroxylated. Other metals can be substituted for the extracted framework aluminum by contacting the zeolite with a metal acetylacetone.

The treatment of zeolites with gaseous chlorine compounds such as $Cl_2$ or HCl to remove aluminum as $AlCl_3$ is described in DE—OS 2,510 740.

U.S. Patent 4,273,753 describes a method of dealuminizing zeolites by treating the zeolite with an inorganic halide or oxyhalide at a temperature which is sufficiently high to remove the resulting aluminum halide or oxyhalide as a vapor.

British Patent 1,061,847 describes a method of removing alumina from certain zeolites including stilbite and zeolites L and T by treatment with mineral or organic acids. The zeolites which may be heated in this way have an initial silica:alumina ratio of at least 5:1. This technique was found, however, to be inapplicable with many zeolites such as ZSM—5, especially those with higher silica:alumina ratios. In addition, certain zeolites such as zeolites X and Y lose an unacceptably large degree of crystallinity when treated with acid, although this may be mitigated by presence of a salt anion which is capable of combining with the aluminum, as reported in U.S. Patent 3,691,099.

It has now been found that zeolite beta may be dealuminized by extraction with mineral acid. This is unexpected from a knowledge both of the characteristics of zeolite beta itself and of the known capabilities of the acid extraction technique because in the past, it was known that it was generally not possible to remove framework aluminum from zeolites with higher silica:alumina ratios. Furthermore the behavior of other zeolite with characteristics similar in certain respects to those of zeolite beta makes it surprising that the acid extraction technique is effective with zeolite beta. For example, neither zeolite Y nor zeolite ZSM—20, both of which are large pore zeolites similar to zeolite beta can be simply treated with acid to remove aluminum. Zeolite Y also tends to lose crystallinity upon acid treatment, whereas zeolite beta retains its crystallinity to a very high degree.

According to the invention, there is provided synthetic crystalline zeolite beta having a silica:alumina mole ratio of at least 100:1.

According to the invention, there is also provided a method for removing aluminum from crystalline zeolite beta by contacting the zeolite with an acid, preferably a dilute mineral acid such as hydrochloric acid. The dealuminized zeolite beta which is produced in this way may have a silica:alumina ratio of at least 100:1, ratios of about 200:1 or even higher being readily attainable. The dealuminization proceeds readily at ambient and mildly elevated temperatures and occurs with minimal losses in crystallinity.

The zeolite beta starting material of the method of the invention may be obtained by the method which is fully described in U.S. Patent 3,308,069 and Re. 28,341, to which reference is made for details of the method. The silica:alumina ratio of the zeolite obtained in this way will be from 5 to 100 and generally will be from 5 to about 30. In terms of composition, the zeolite in its as synthesized form may be expressed as follows (anhydrous basis):

$$[XNa(1.0\pm0.1—X)TEA]AlO_2 \cdot YSiO_2.$$

where X is less than 1, preferably less than 0.75; TEA represents the tetraethylammonium ion; Y is greater than 5 but less than 100. Water of hydration may be present in varying amounts, dependent in part upon the metal cation present and the synthesis conditions. The number of moles of water per molecule of anhydrous zeolite may typically be up to 60 and often is up to about 4.

The sodium is derived from the synthesis mixture used to prepare the zeolite. This synthesis mixture contains a mixture of the

oxides (or of materials whose chemical compositions can be completely represented as mixtures of the oxides) $Na_2O$, $Al_2O_3$, $[(C_2H_5)_4N]_2O$, $SiO_2$ and $H_2O$. The mixture is held at a temperature of about 75 to 200°C until crystallization occurs. The composition of the reaction mixture expressed in terms of mol ratios, preferably falls within the following ranges:

$SiO_2/Al_2O_3$—10 to 200
$Na_2O$/tetraethylammonium hydroxide (TEAOH)—0.0 to 0.1
TEAOH/$SiO_2$—0.1 to 1.0
$H_2O$/TEAOH—20 to 75.

The product which crystallizes from the hot reaction mixture is separated, suitably by centrifuging or filtration, washed with water and dried. The material so obtained may be calcined by heating in air on an inert atmosphere at a temperature usually within the range 200 to 900°C or higher. This calcination degrades the tetraethylammonium ions to hydrogen ions and removes the water so that N in the formula above becomes zero or substantially so. The formula of the zeolite is then:

$$[XNa(1.0\pm0.1-X)H] \cdot AlO_2 \cdot YSiO_2$$

where X and Y have the values ascribed to them above.

If this H-form zeolite is subjected to base exchange, the sodium may be replaced by another cation to give a zeolite of the formula (anhydrous basis):

$$[\frac{x}{n} M(1\pm0.1-X)H] \cdot AlO_2 \cdot YSiO_2.$$

where X and Y have the values ascribed to them above and n is the valence of the metal M which may be any metal but is preferably a metal of Groups IA, IIA and IIIA of the Periodic Table or a transition metal.

The as-synthesized sodium form of the zeolite may be subjected to base exchange directly without intermediate calcination to give a material of the formula (anhydrous basis):

$$[\frac{x}{n} M(1\pm0.1-X)TEA]AlO_2 \cdot YSiO_2$$

where X, Y, n and m are as described above. This form of the zeolite may then be converted partly into the hydrogen form by calcination, for example at 200°C to 900°C or higher. The completely hydrogen form may be made by ammonium exchange followed by calcination in air or an inert atmosphere such as nitrogen. Base exchange may be carried out in the manner disclosed in U.S. Patents 3,308,069 and Re. 28,341.

Because tetraethylammonium hydroxide is used in its preparation, zeolite beta may contain occluded tetraethylammonium ions (for example, as the hydroxide or silicate) within its pores in addition to that required by electroneutrality and indicated in the calculated formulae given above. The formulae, of course, are calculated on the basis that one equivalent of cation is required per Al atom in tetrahedral coordination in the crystal lattice.

The zeolite is conveniently used in the hydrogen form for the dealuminization process of the invention although other cationic forms may also be employed, for example, the sodium form. If these other forms are used, sufficient acid should be employed to allow for the replacement by protons of the original cations in the zeolite. The zeolite should be used in a convenient particle size for mixing with the acid to form a slurry of the two components. The amount of zeolite in the slurry should generally be from 5 to 60 percent by weight.

The acid may be a mineral acid, that is, an inorganic acid, or an organic acid. Typical inorganic acids which can be employed include mineral acids such as hydrochloric, sulfuric, nitric and phosphoric acids, peroxydisulfonic acid, dithionic acid, sulfamic acid, peroxymonosulfuric acid, amidodisulfonic acid, nitrosulfonic acid, chlorosulfuric acid, pyrosulfuric acid, and nitrous acid. Representative organic acids which may be used include formic acid, trichloroacetic acid, and trifluoroacetic acid.

The concentration of added acid should be such as not to lower the pH of the reaction mixture to an undesirably low level which could affect the crystallinity of the zeolite undergoing treatment. The acidity which the zeolite can tolerate will depend, at least in part, upon the silica/alumina ratio of the starting material. Generally, it has been found that zeolite beta can withstand concentrated acid without undue loss in crystallinity but as a general guide, the acid will be from 0.1N to 4.0N, usually 1 to 2N. These values hold good regardless of the silica/alumina ratio of the zeolite beta starting material. Stronger acids tend to effect a relatively greater degree of aluminum removal than weaker acids.

The dealuminization reaction proceeds readily at ambient temperatures but mildly elevated temperatures may be employed, for example up to 100°C. The duration of the extraction will affect the silica:alumina ratio of the product since extraction, being diffusion controlled, is time dependent. However, because the zeolite becomes progressively more resistant to loss of crystallinity as the silica:alumina ratio increases (it becomes more stable as the aluminum is removed), higher temperatures and more concentrated acids may be used towards the end of the treatment than at the beginning without the attendant risk of losing crystallinity.

After the extraction treatment, the product is water washed free of impurities, preferably with

distilled water, until the effluent wash water has a pH within the range of 5 to 8.

The crystalline dealuminized products obtained by the method of the invention have substantially the same crystallographic structure as that of the starting aluminosilicate zeolite but with increased silica:alumina ratios. The formula of the dealuminized zeolite beta will therefore be (anhydrous basis):

$$[\frac{x}{n}M(1\pm0.1-X)H]AlO_2 \cdot YSiO_2.$$

where X is less than 1, preferably less than 0.75, Y is at least 100, preferably at least 150. M is a metal, preferably a transition metal or a metal of Groups IA, IIA and IIIA, or a mixture of such metals. The silica:alumina ratio, Y, will generally be in the range of 100:1 to 500:1, more usually 150:1 to 300:1, for example 200:1 or more. Water of hydration may be present in the actual zeolite in varying amounts.

Catalytic materials for particular uses can be prepared by replacing the cations as required with other metallic or ammoniacal ions. If calcination is carried out prior to ion exchange, some or all of the resulting hydrogen ions can be replaced by metal ions in the ion exchange process. For certain dehydrogenation and hydrogenation reactions such as hydrocracking, the catalyst will preferably contain a metal of Groups VB, VIB and VIII of the Periodic Table and this metal may either be in the cation of the zeolite or deposited on the surface of the zeolite. The silica:alumina ratio will be at least 100:1 and preferably at least 150:1 Ratios of 200:1 or higher, for example 250:1, 300:1, 400:1 and 500:1 may be obtained by use of the procedure of the invention. If desired, the zeolite may be steamed prior to acid extraction so as to increase the silica:alumina ratio and render the zeolite more stable to the acid. The steaming may also serve to increase the ease with which the aluminum is removed and to promote the retention of crystallinity during the extraction procedure.

The zeolite, in addition to possessing a composition as defined above, may also be characterized by its X-ray diffraction data which are the same as those for the original zeolite beta, as set out in U.S. Patent Re. 28,341. The significant d values (Angstroms, radiation: K alpha doublet of copper, Geiger counter spectrometer) are as shown in Table 1 below:

TABLE 1
d Values of Reflections in Dealuminized Zeolite Beta

| |
|---|
| 11.4±0.2 |
| 7.4±0.2 |
| 6.7±0.2 |
| 4.25±0.1 |
| 3.97±0.1 |
| 3.0±0.1 |
| 2.2±0.1 |

The dealuminized crystalline aluminosilicate products obtained exhibit catalytic properties particularly for transforming organic compounds which are catalytically convertible in the presence of acidic catalyst sites. For example, they are useful in a wide variety of hydrocarbon conversion processes including dealkylation, alkylation, isomerization, disproportionation, hydration of olefins, amination of olefins, hydrocarbon oxidation, dehydration of alcohols, dehydrogenation, desulfurization, hydrogenation, hydroforming, reforming, cracking hydrocracking, oxidation, polymerization, and aromatization. The catalysts are especially stable and may be used in these and related processes at temperatures ranging from ambient temperatures of, for example, 20°C up to 750°C. These catalysts may also be used in processes in which the catalyst is periodically regenerated by burning off combustible deposits.

These dealuminized zeolites have a lower acidic activity than the starting materials since acidic activity is related to the number of sites available for protonation and removal of aluminum reduces the proportion of these sites. These low acidity beta zeolites either alone or in combination with other catalytic components are of great potential utility for the selective production of higher octane naphtha, jet fuels, diesel fuels and lubricants from paraffinic feedstocks. Significant improvements in distillate yield for a number of different processing applications may be expected. Since the silica:alumina ratio has a marked effect in hydrocracking processes, increases in the ratio improving the selectivity towards the formation of iso-paraffins as compared to n-paraffins, the dealuminized beta

zeolites will have particular utility in these processes together with hydroisomerization reactions.

It may be desirable to incorporate the dealuminized zeolite in another material resistant to the temperature and other conditions employed in the process. Such matrix materials include synthetic or natural substances as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the montmorillonite and kaolin families. These clays can be used in the raw state as originally mined or initially subjected to calcination, acid treatment or chemical modification.

The dealuminized zeolites may be composited with a porous matrix material, such as alumina, silica-alumina, silica-magnesia, silica-zirconia, silica-thoria, silica-berylia, silica-titania as well as ternary compositions, such as silica-alumina-thoria, silica-alumina-zirconia, silica-alumina-magnesia, and silica-magnesia-zirconia. The matrix may be in the form of a cogel. The relative proportions of zeolite component and inorganic oxide gel matrix may vary widely with the zeolite content ranging from between 1 to 99, more usually 5 to 80, percent by weight of the composite.

The invention is illustrated by the following Examples 4, 5 and 6; Examples 1, 2, 3, 7 and 8 are presented for purposes of comparison only.

Examples 1—5

Samples of zeolite beta in the hydrogen form and having a silicon:aluminum ratio of 15:1 and a crystallinity of 100 percent were treated with excess hydrochloric acid of ranging normality at 25°C or 95°C under reflux for ranging periods as shown in Table 2 below. The silicon:aluminum ratios of the products were determined by ammonia desorption thermogravimetric analysis (TGA) and the crystallinities by X-ray peak area determination. The results are shown in Table 2 below.

TABLE 2
Dealuminization of Zeolite Beta

| Ex | Treatment | Framework $SiO_2/AlO_2$ | Crystallinity (%) |
|---|---|---|---|
| 1 | 0.1 N HCl, 25°, 1 hr. | 20 | 100 |
| 2 | 0.1 N HCl, 95°, 1 hr. | 20 | 100 |
| 3 | 1 N HCl, 95°, 1 hr. | 95 | 85 |
| 4 | 2 N HCl, 95°, 1 hr. | 140 | 75 |
| 5 | 2 N HCl, 95°, 2 hr. | 200 | — |

Comparison of Examples 1 and 2 shows that the dealumination proceeds readily both at ambient and mildly elevated temperatures, although the degree of dealuminization effected is quite small with acid of this concentration. Use of more concentrated acid, as in Examples 3 and 4, gives a far greater degree of dealuminization a slight loss of crystallinity occurs but the product remains essentially a crystalline zeolite. Prolonged treatment, as shown in Example 5 produces a further increase in silicon:aluminum ratio with a relatively smaller loss in crystallinity, indicating the greater stability of the zeolite to acid attack at higher silicon:aluminum ratios.

Examples 6—8

Samples of zeolite beta having silicon:aluminum ratios (bulk assay) of 10.65:1, 11.5:1 and 17.5:1 were calcined in flowing nitrogen, increasing the temperature from room temperature to 500°C at 1°/minute, and then holding at 500°C for 4 hours. At 500°C the zeolites were air calcined by increasing the air concentration from 15 to 30, 50, 70 and, finally, to 100 percent at 30 minute intervals and holding in 100 percent air for an additional 5 hours.

About 5 grams each of the calcined zeolites were then treated as follows:

0.1 N HCl, 95°, 1 hour

1 M $NH_4Cl$, 95°, 1 hour

2.0 N HCl, 95°, 1 hour

1 M $NH_4Cl$, 95°, 1 hour

The results are summarized in Table 3 below.

TABLE 3
Dealuminization of Zeolite Beta

| Ex | Initial $SiO_2/AlO_2$ | Final $SiO_2/AlO_2$ |
|---|---|---|
| 6 | 10.65 | 140, 125* |
| 7 | 11.5 | 97 |
| 8 | 17.5 | 75 |

* Large sample (15 g.) used for this determination.

**Claims**

1. Synthetic crystalline zeolite beta having a composition, on an anhydrous basis, of:

$$[x\frac{M}{n}(1\pm0.1-X)H]\cdot AlO_2\cdot YSiO_2$$

where
X is less than 1,
Y is at least 100,
M is a metal, and
n is the valence of M,

and having d values of its X-ray powder diffraction pattern essentially as follows:

11.4±0.2
7.4±0.2
6.7±0.2
4.25±0.1
3.97±0.1
3.0±0.1
2.2±0.1.

2. A zeolite according to claim 1, in which X is less than 0.75.
3. A zeolite according to claim 1 or claim 2, in which Y is at least 200.
4. A method of removing aluminum from synthetic crystalline zeolite beta, which comprises contacting zeolite beta having the composition (on an anhydrous basis) of:

$$[x\frac{M}{n}(1\pm0.1-X)H]\cdot AlO_2\cdot YSiO_2$$

where
X is less than 1,
Y is greater than 5 but less than 100,
M is a metal, and
n is the valence of M

with acid for a sufficient time to effect removal of aluminum from the zeolite.
5. A method according to claim 4, in which after the removal of aluminum has been effected, the zeolite beta has the composition (on an anhydrous basis), of:

$$[x\frac{M}{n}(1\pm0.1-X)H]\cdot AlO_2\cdot YSiO_2$$

where
X is less than 1,
Y is at least 100,
M is a metal, and
n is the valence of M.
6. A method according to claim 5 in which Y is at least 200.
7. A method according to any one of claims 4 to 6, in which the acid is a mineral acid.
8. A method according to claim 7, in which the acid is hydrochloric acid.

**Patentansprüche**

1. Synthetischer kristalliner Zeolith beta mit einer Zusammensetzung, bezogen auf eine wasserfreie Basis, von:

$$[x\frac{M}{n}(1\pm0.1-X)H]\cdot AlO_2\cdot YSiO_2$$

worin
X kleiner als 1 ist,
Y mindestens 100 beträgt,
M ein Metall ist und
n die Wertigkeit von M ist,
der im wesentlichen die folgenden d-Werte seines Pulver-Röntgendiagramms hat:

11.4±0.2
7.4±0.2
6.7±0.2
4.25±0.1
3.97±0.1
3.0±0.1
2.2±0.1.

2. Zeolith nach Anspruch 1, worin X kleiner als 0,75 ist.
3. Zeolith nach Anspruch 1 oder 2, worin Y mindestens 200 beträgt.
4. Verfahren zur Entfernung von Aluminium aus einem synthetischen kristallinen Zeolith beta, welches das Inkontaktbringen des Zeolith beta mit der Zusammensetzung (bezogen auf eine wasserfreie Basis) von:

$$[x\frac{M}{n}(1\pm0.1—X)H]\cdot AlO_2\cdot YSiO_2$$

worin

X kleiner als 1 ist,

Y größer als, 5 aber kleiner als 100 ist,

M ein Metall ist und

n die Wertigkeit von M ist

mit einer Säure während eines ausreichenden Zeitraumes umfaßt, um die Entfernung des Aluminiums aus dem Zeolith zu bewirken.

5. Verfahren nach Anspruch 4, worin nachdem die Aluminiumentfernung ausgeführt wurde, der Zeolith die Zusammensetzung hat (bezogen auf eine wasserfreie Basis):

$$[x\frac{M}{n}(1\pm0.1—X)H]\cdot AlO_2\cdot YSiO_2$$

worin

X kleiner als 1 ist,

Y mindestens 100 ist,

M ein Metall ist und

n die Wertigkeit von M ist.

6. Verfahren nach Anspruch 5, worin Y mindestens 200 beträgt.

7. Verfahren nach einem der Ansprüche 4 bis 6, worin die Säure eine Mineralsäure ist.

8. Verfahren nach Anspruch 7, worin die Säure Chlorwasserstoffsäure ist.

**Revendications**

1. Zéolite béta cristalline synthétique présentant pour le produit anhydre, la composition suivante:

$$[x\frac{M}{n}(1\pm0,1—X)H]\cdot AlO_2\cdot YSiO_2$$

dans laquelle:

X est inférieur à 1;

Y est au moins égal à 100;

M représente un métal; et

n représente la valence de M;

et présentant sensiblement les valeurs d suivantes de son diagramme de diffraction de poudre aux rayons-x:

11,4±0,2

7,4±0,2

6,7±0,2

4,25±0,1

3,97±0,1

3,0±0,1

2,2±0,1

2. Zéolite selon la revendication 1, dans laquelle X est inférieur à 0,75.

3. Zéolite selon la revendication 1 ou 2, dans laquelle Y est au moins égal à 200.

4 Méthode d'élimination de l'aluminium d'une zéolite béta cristalline synthétique qui consiste à mettre la zéolite béta synthétique ayant (pour le produit anhydre) la composition suivante:

$$[x\frac{M}{n}(1\pm0,1—X)H]\cdot AlO_2\cdot YSiO_2$$

dans laquelle:

X est inférieur à 1;

Y est supérieur à 5, mais inférieur à 100;

M représente un métal; et

n représente la valence de M;

au contact d'un acide pendant un temps suffisant pour obtenir l'élimination de l'aluminium de la zéolite.

5. Procédé selon la revendication 4, dans lequel, après que l'élimination de l'aluminium ait été effectuée, la zéolite béta présente (pour le produit anhydre) la composition suivante:

$$[x\frac{M}{n}(1\pm0,1—X)H]\cdot AlO_2\cdot YSiO_2$$

dans laquelle:

X est inférieur à 1;

Y est au moins égal à 100;

M représente un métal; et

n représente la valence de M.

6. Procédé selon la revendication 5, dans lequel Y est au moins égal à 200.

7. Procédé selon l'une quelconque des revendications 4 à 6 dans lequel l'acide est un acide minéral.

8. Procédé selon la revendication 7, dans lequel l'acide est l'acide chlorhydrique.